# EUROPÄISCHE PATENTANMELDUNG

(11) **EP 0 842 626 A1**
(43) Veröffentlichungstag der Anmeldung: **20.05.1998**
(21) Anmeldenummer: 97117454.5
(22) Anmeldetag: 09.10.1997
(51) Int. Cl.: A47J 43/07

(54) **Arbeitswerkzeug zum Rühren, Kneten oder Zerkleinern von Nahrungsmitteln**

(30) Priorität: 04.11.1996 DE 19645312
(71) Anmelder: Braun Aktiengesellschaft, Frankfurt am Main (DE)
(72) Erfinder: Lorenz, Marga, 60316 Frankfurt am Main (DE); Kamprath, Karl-Heinz, 65207 Wiesbaden (DE)

(57) **Zusammenfassung**

Die Erfindung betrifft ein Arbeitswerkzeug (4) zum Rühren, Kneten oder Zerkleinern von Nahrungsmitteln für den Einsatz im Innenraum (25) eines Arbeitsbehälters (2) einer elektrisch angetriebenen Küchenmaschine (16). Das Arbeitswerkzeug (4) weist mindestens eine mit einem Einzelwerkzeug (1, 8, 3, 10, 17, 18) versehene Nabe (15) mit einer zentralen Ausnehmung (22) auf. Die Ausnehmung (22) ist an ihrem dem Boden (26) des Arbeitsbehälters (2) zugewandten Ende offen und weist eine Mitnehmerkupplung (20) auf, die ihrerseits von dem offenen Ende (24) her mit einer Gegenkupplung (21) einer Antriebswelle (9) der Küchenmaschine (16) kuppelbar und von dieser antreibbar ist. Nach der Erfindung ist die zentrale Ausnehmung (22) der Nabe (15) über einen Verbindungskanal (23) mit der Außenfläche (27) des Arbeitsbehälters (2) verbunden und mündet oberhalb des offenen Endes (24) in die Außenfläche (27) der Nabe (15) hierdurch wird erreicht, daß insbesondere zähe Nahrungsmittel, wie Teig, während der Rotation des Arbeitswerkzeugs (4) nicht in den Bereich der Mitnehmerkupplung (20) gelangen, wo sie sich nur schwer wieder entfernen lassen.

## Beschreibung

Die Erfindung betrifft ein Arbeitswerkzeug zum Rühren, Kneten oder Zerkleinern von Nahrungsmitteln für den Einsatz im Innenraum eines Arbeitsbehälters einer elektrisch angetriebenen Küchenmaschine, welches eine mit mindestens einem Einzelwerkzeug versehene Nabe mit einer zentralen Ausnehmung aufweist, die an ihrem dem Boden des Arbeitsbehälters zugewandten Ende offen ist und in der eine Mitnehmerkupplung ausgebildet ist, die ihrerseits von dem offenen Ende her mit einer Gegenkupplung einer Antriebswelle der Küchenmaschine kuppelbar und von dieser antreibbar ist.

Ein derartiges Arbeitswerkzeug ist beispielsweise aus der US-4,143,824 bekannt. Das Arbeitswerkzeug wird hierbei auf die in den Arbeitsbehälter der Küchenmaschine hineinragende Antriebswelle derart aufgesetzt, daß es mit seiner Mitnehmerkupplung drehfest mit der Gegenkupplung der Antriebswelle verbunden ist. Über die Öffnung des Arbeitsbehälters können Nahrungsmittel eingegeben werden und nach Verschließen des Arbeitsbehälters durch den Deckel diese nach Einschalten des Gerätes durch das rotierende Arbeitswerkzeug vermischt und zerkleinert werden.

Beim Bearbeiten von zähflüssigen Nahrungsmitteln, insbesondere Teig, hat es sich herausgestellt, daß derartige feste Nahrungsmittel während des Rotierens des Arbeitswerkzeugs in die Ausnehmung gelangen und entlang dieser nach oben bis zur Mitnehmerkupplung kriechen und sich dort festsetzen. Aufgrund des verhältnismäßig kleinen Durchmessers der Ausnehmung kann diese nach Beendigung des Rühr-, Zerkleinerungs- oder Knetvorgangs nur schwer gesäubert werden, da sie kaum zugänglich ist. Insbesondere dann, wenn sich der Teig im nachhinein noch erhärtet, ist er kaum noch aus der Ausnehmung im Bereich der Mitnehmerkupplung restlos entfernbar. Ein weiterer Nachteil besteht darin, daß, wenn man nach einem Bearbeitungsvorgang das Arbeitswerkzeug aus dem mit zähen Nahrungsmitteln, wie Teig, versehenen Arbeitsbehälter nach oben herausnehmen will, dies nur mit verhältnismäßig hohem Kraftaufwand möglich ist.

Aufgabe der Erfindung ist es nun, ein Arbeitswerkzeug zum Rühren, Kneten oder Zerkleinern von Nahrungsmitteln für den Einsatz im Innenraum eines Arbeitsbehälters einer Küchenmaschine zu schaffen, dessen Ausnehmung während des Bearbeitungsvorgangs weniger verschmutzt wird und das sich nach einem Bearbeitungsvorgang verhältnismäßig leicht aus dem mit Nahrungsmitteln gefüllten Arbeitsbehälter entnehmen läßt.

Diese Aufgabe wird durch die kennzeichnenden Merkmale des Patentanspruchs 1 gelöst. Durch das einfache Anbringen eines Verbindungskanals an der Nabe des Arbeitswerkzeugs, die von der Außenfläche bis hin zur Ausnehmung verläuft, wird erreicht, daß insbesondere zähe Nahrungsmittel, wie Teig, nicht mehr in der Ausnehmung zumindest über den die Nahrungsmittel gerade einnehmenden Füllstand nach oben hinauswandern und somit die Mitnehmerkupplung verschmutzen können. Zwar kann, wenn die Mitnehmerkupplung nicht so ausgelegt ist, daß sie oberhalb des maximal zulässigen Füllstands von Nahrungsmitteln im Arbeitsbehälter ausgebildet ist, bei einer sehr flüssigen Nahrung diese in den Bereich der Mitnehmerkupplung gelangen, da aber die Nahrung verhältnismäßig flüssig ist, läßt sie sich auch anschließend durch Auswaschen leicht reinigen.

Das Problem der Reinigung entsteht vielmehr bei zähen Teigen, die aber erst dann entstehen, wenn das Mehl mit geringer Flüssigkeit durch das Arbeitswerkzeug vermischt wird. Bis zu diesem Zeitpunkt kriecht nämlich das noch trockene Mehl nicht bis zum geschlossenen Ende der Ausnehmung. Erst dann, wenn Mehl, Eier und Milch zu einem Teig verrührt werden, kann dieser in der Ausnehmung nochwandern. Durch den Verbindungskanal wird nun vermieden, daß während des Rührvorgangs sich ein Vakuum in der Ausnehmung bilden kann, das zum Hochkriechen von Teig aufgrund der damit verbundenen Adhäsion an der Innenwandung in der Ausnehmung führt, und dies insbesondere über den gerade im Arbeitsbehälter vorhandenen Füllstand.

Es hat sich nämlich in der Praxis gezeigt, das beim Rotieren der Nahrungsmittel aufgrund der auf die Nahrungsmittel einwirkenden Zentrifugalkräfte diese nach außen geschleudert werden, so daß sich in der Ausnehmung ein gewisser Unterdruck bilden kann, der dann infolge der zusätzlichen Adhäsion zum Hochkriechen der Nahrungsmittel in der Ausnehmung führt. Durch den erfindungsgemäßen Verbindungskanal wird dieser Nachteil nun vermieden, so daß insbesondere der schwer zugängliche Mitnehmerkupplungsbereich in der Ausnehmung nahezu frei von anhaftenden Nahrungsmitteln, insbesondere bei zähem Teig, bleibt.

Der Verbindungskanal hat weiterhin den Vorteil, daß beim Herausnehmen des Arbeitswerkzeugs aus dem noch mit Nahrungsmitteln gefüllten Behälter der den unteren Bereich der Ausnehmung verschließende Teig aus der Ausnehmung herausgezogen wird, da von außen Luft über den Verbindungskanal in die Ausnehmung gelangen kann. Hierdurch läßt sich das Arbeitswerkzeug erheblich leichter aus dem Arbeitsbehälter herausnehmen.

Durch die Merkmale des Patentanspruchs 2 wird erreicht, daß auch bei stehender Küchenmaschine der Verbindungskanal oberhalb des maximal zulässigen Füllstandes von Nahrungsmitteln in den Raum des Behälters mündet, so daß die Ausnehmung stets mit der Atmosphärenluft über den Verbindungskanal in Verbindung steht. Aber auch dann, wenn der Verbindungskanal unterhalb des maximalen Füllstands von Nahrungsmitteln in den Raum des Behälters mündet, so kann zwar der Verbindungskanal von Nahrungsmitteln verstopft werden und es können auch Nahrungsmittel evenutell in die Ausnehmung eindringen, diese werden aber, sobald das Arbeitswerkzeug in Rotation versetzt wird, wieder nach außen in den Raum des Arbeitsbehälters geschleudert. Zwar kann hierdurch die Ausnehmung verschmutzen, derartig flüssige Nahrungsmittel sind aber verhältnismäßig leicht reinigbar.

Befindet sich hingegen zäher Teig im Arbeitsbehälter, so kann dieser aufgrund seiner Zähigkeit möglicherweise zwar in den Verbindungskanal eindringen, diese werden aber bei Rotation des Arbeitswerkzeugs ebenso wieder aus dem Verbindungskanal herausgeschleudert und es kann Luft über den Verbindungskanal in die Ausnehmung der Nabe eindringen, um so ein Hochwandern von Nahrungsmitteln vom offenen Ende der Nabe her zu vermeiden.

Durch die Merkmale des Patentanspruchs 3 wird nur ein geringer Spalt zwischen dem Boden des Arbeitsbehälters und dem dem Boden zugewandten Ende der Nabe erzeugt, so daß auch diese Maßnahme dazu dient, daß überhaupt erst keine nennenswerten Teigmengen während der Rotation des Arbeitswerkzeugs in den Bereich der Ausnehmung eindringt.

Verläuft nach den Merkmalen des Patentanspruchs 4 der Verbindungskanal im wesentlichen horizontal, so wird ein Eindringen von Nahrungsmitteln in den Verbindungskanal zusätzlich erschwert.

Nach den Merkmalen des Patentanspruchs 5 dringt der Verbindungskanal in den Raum der Mitnahmekupplung ein, um so gerade diesen gefährdeten Bereich vor Eindringen von Teig zu schützen.

Durch die Merkmale des Patentanspruchs 6 können auch flüssige Nahrungsmittel im Stillstand der Küchenmaschine kaum in den schwer zugänglichen und mit Ecken versehenen Raum der Mitnahmekupplung eindringen.

Durch die Merkmale des Patentanspruchs 7 wird erreicht, daß auch dann, wenn im Stillstand zähe Nahrungsmittel, wie Teig, die Einlaßöffnung verschließen, diese erst gar nicht weiter in die Einlaßöffnung eindringen und somit auch nicht bis zur Ausnehmung gelangen und diese verschmutzen können.

Ein Ausführungsbeispiel der Erfindung ist in der Zeichnung dargestellt und wird im folgenden näher beschrieben. Es zeigen:
- Fig. 1: eine Seitenansicht einer Küchenmaschine mit einem erfindungsgemäßen Rühr- und Knetwerkzeug und
- Fig. 2: eine Draufsicht auf das Rühr- und Knetwerkzeug aus einer Ebene gemäß der Schnittlinie I-I in Fig. 1.

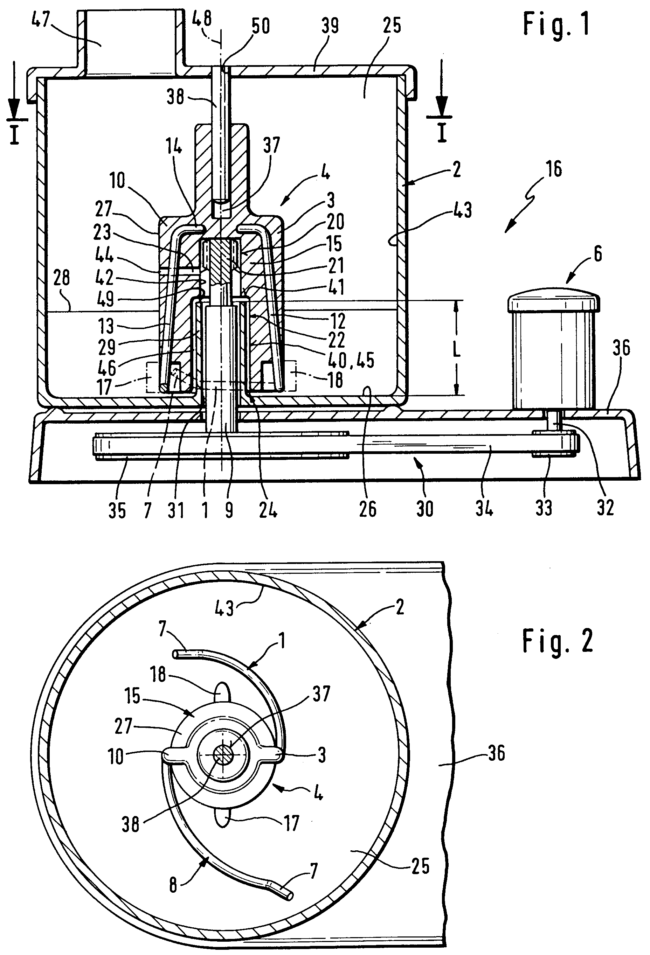

Die Fig. 1 zeigt eine Küchenmaschine 16 in einer geschnittenen Seitenansicht, mit einem Antriebsmotor 6, der über ein durch einen Riementrieb gebildetes Untersetzungsgetriebe 30 ein Rühr- und Knetwerkzeug 4 über eine Antriebswelle 9 antreibt, die senkrecht im Zentrum eines Arbeitsbehälters 2 angeordnet und durch den Boden 26 dieses Behälters 2 geführt ist. Dabei durchdringt die Antriebswelle 9 eine im Arbeitsbehälter 2 ausgebildete zentrale Öffnung 31, die von einer mit dem Boden 26 einteilig verbundenen Hülse 29 gebildet wird, die sich nach oben in den Innenraum 25 des Arbeitsbehälters 2 erstreckt und so verhindert, daß Nahrungsmittel oder Flüssigkeiten aus dem Arbeitsbehälter 2 austreten können. Der maximale Füllstand 28 wird durch die Länge L der Hülse 29 vom Boden 26 her bestimmt.

Das Untersetzungsgetriebe 30 besteht aus einer mit der Motorwelle 32 drehfest verbundenen ersten Riemenscheibe 33, die über einen Zahnriemen 34 eine zweite Riemenscheibe 35 antreibt, die wiederum drehfest mit der Antriebswelle 9 verbunden ist. Der Antriebsmotor 6 und das Untersetzungsgetriebe 30 sind im Gehäuse 36 gehalten. Das Rühr- und Knetwerkzeug 4 weist eine zentrale Ausnehmung 22 in Form einer Sacklochbohrung auf, an deren in Fig. 1 oberen Ende eine in Form einer Verzahnung ausgebildete Mitnehmerkupplung 20 angeordnet ist, in die eine an der Antriebswelle 9 entsprechend ausgebildete Gegenkupplung 21 drehfest eingreift. Die Nabe 15 des Arbeitswerkzeugs 4 erstreckt sich über die Mitnehmerkupplung 20 gemäß Fig. 1 nach oben hinaus und weist von oben her eine in die Nabe 15 eindringende zentrale Sacklochbohrung 37 auf, in der ein Führungsstift 38, vorzugsweise aus Edelstahl, eingepreßt ist. Der Führungsstift 38 ragt aus der Nabe 15 nach oben heraus und greift in eine im Deckel 39 des Arbeitsbehälters 2 ausgebildete Bohrung 50 ein. Auf diese Weise ist das Arbeitswerkzeug 4 beidseitig, also über den Deckel 39 einerseits und über die Antriebswelle 9 andererseits, zentriert, um Schwingungen und vorzeitige Brüche der Lagereinheit der Antriebswelle 9 zu vermeiden.

Das Rühr- und Knetwerkzeug 4 besteht aus einer sich nach oben verjüngenden konischen, aus Kunststoff hergestellten, Nabe 15, an der im unteren Bereich zwei stabförmige Rührarme 1 und 8 durch Einspritzen in die Nabe 15 befestigt sind. Dabei erstrecken sich die Rührarme 1 und 8 im wesentlichen parallel zum Boden 26 des Arbeitsbehälters 2. Die Rührarme 1 und 8 besitzen im Interesse eines guten Durchmischens unterschiedliche Längen und sind entgegen der Drehrichtung der Nabe 15 gebogen. Um die Rührwirkung zu erhöhen, sind an den freien Enden der Rührarme 1 und 8 nach oben abgewinkelte Rührstäbe 7 angebracht. Die Rührarme 1, 8 sind zum Behälterboden in einem Winkel von etwa 2 Grad geneigt, so daß der radial äußere Teil der Arme 1, 8 einen größeren Abstand vom Boden 26 aufweist, als der Abschnitt im Bereich der Nabe 15.

Die Rührarme 1, 8 bestehen aus einem elastischen Edelstahlmaterial, so daß sie je nach der beim Rühren auf sie einwirkenden Kraft mehr oder weniger zurückgebogen werden, wodurch sich ihre wirksame, auf die zu durchmischende Masse einwirkende Fläche so verändert, daß ein gewisses Drehmoment nicht überschritten wird. Die vorzugsweise aus Federstahldraht bestehenden Stäbe 12, 13 bilden zusammen mit den Armen 1, 8 eine Einheit und sind durch den Körper der Nabe 15 des Rühr- und Knetwerkzeuges 4 in Form von Stegen 12 und 13 nach oben geführt, wobei sie am oberen Ende in der Nabe 15 bis zu einem Bügel 14 geführt sind. Durch diese Ausgestaltung wird ein stabiles und drehmomentsteifes Arbeitswerkzeug 4 bei dennoch elastischen Rührarmen 1, 8 erreicht. Anstelle der Rührarme 1, 8 können auch sichelartige Messer (nicht dargestellt), so wie sie aus der DE-C-35 38 383 bekannt sind, in die Nabe 15 eingebracht werden.

Im oberen Bereich, also oberhalb der Rührarme 1 und 8 sind zwei als zusätzliche Knetwerkzeuge dienende Rippen 3 und 10 vorgesehen. Diese Rippen 3, 10 oder Knetflügel ragen diametral in den Mischbereich des Arbeitsbehälters 2 hinein und sind radial gesehen weentlich kürzer als die Rührarme 1, 8.

Die von oben in den Arbeitsbehälter 2 eingebrachte, teigige Masse wird beim Drehen der Nabe 15 von den als Knetwerkzeugen dienenden Knetflügeln 3 und 10 zwischen der Innenwand 43 des Arbeitsbehälters 2 und der Außenwand 27 der Nabe 15 durchgeknetet. In Folge der sich nach oben verjüngenden konischen Formgebung der Nabe 15 selbst wird auf denTeig eine nach oben zur Öffnung des Behälters hin gerichtete Kraft ausgeübt, die den Teig bei der Bearbeitung zwischen dem Bereich der Rührarme 1 und 8 und den Knetflügeln 3, 10 hält. Die in der Nähe des Behälterbodens geführten Rührarme 1 und 8 dienen dazu, die vorher in den Arbeitsbehälter 2 eingegebenen Zutaten, wie z.B. Mandeln oder Rosinen zu durchmischen und dabei aufzuwirbeln, so daß sie von dem darüber befindlichen Teig aufgenommen werden. Die am unteren Ende des Arbeitswerkzeuges 4 an der Nabe 15 angebrachten Schaufeln 17, 18 stehen radial nach außen geringfügig weiter hervor als die Knetflügel 3, 10 und verlaufen um 90° versetzt zu den Knetflügeln 3, 10. Die Schaufeln 17, 18 dienen einerseits zusätzlich als Rührelemente und andererseits als die Nahrungsmittel nach außen befördernde Elemente.

Nach Fig. 1 wird die Ausnehmung 22 von einer Stufenbohrung gebildet, in deren im Durchmesser größeren Bereich die 40 rohrförmige Hülse 29 mit geringem Abstand konzentrisch verläuft. An den größeren Bereich 40 schließt sich eine Ringstufe 41 an, an die sich nach oben ein im Durchmesser kleinerer Bereich 42 der Ausnehmung 22 anschließt, in der die Mitnehmerkupplung 20 ausgebildet ist. Die Ringstufe 41 verläuft nach Fig. 1 geringfügig oberhalb des freien Endes 49 der rohrfömgen Hülse 29.

Der Verbindungskanal 23 verbindet die Außenfläche 27 der Nabe 15 mit der Ausnehmung 22. Im Ausführungsbeispiel nach Fig. 1 mündet der Verbindungskanal 23 in die Ausnehmung 22 kleineren Durchmessers 42, also in den Bereich der Mitnehmerkupplung 20. Der Verbindungskanal 23 verläuft nach Fig. 1 im wesentlichen horizontal, also parallel zum Boden 26 des Arbeitsbehälters 2. Anstelle eines Verbindungskanals 23 können auch an der Nabe 15 mehrere Verbindungskanäle 23 (nur einer dargestellt) ausgebildet sein, die eine Verbindung von der Außenfläche 27 zur Ausnehmung 22 herstellen.

Werden im Betrieb der Küchenmaschine Nahrungsmittel bearbeitet, so werden diese durch das rotierende Arbeitswerkzeug 4 in Rotation versetzt und nach außen an die Innenwandung 43 des Arbeitsbehälters 2 geschleudert. Dabei wird zumindest der obere Bereich der Nabe 15 durch Luft aus der Atmosphäre zugänglich, so daß auch die Eintrittsöffnung 44 des Verbindungskanals 23 frei wird und Luft über den Verbindungskanal 23 in die Ausnehmung 22 einfließen kann. Durch die nach außen an die Innenwandung 43 des Arbeitsbehälters 2 während des Betriebs der Küchenmaschine geförderten Nahrungsmittel würde in der Ausnehmung 22 ein Unterdruck entstehen, wenn nicht der Verbindungskanal 23 Atmosphärenluft zur Ausnehmung 22 hin leiten würde. Durch diese Maßnahme wird verhindert, daß insbesondere bei der Verarbeitung von Teig, also zähen Nahrungsmitteln, dieser an der Innenwand 45 der Ausnehmung 22 hochkriecht und bis in den Bereich der Mitnehmerkupplung 20 gelangt, der dann kaum aus diesem Bereich entfernbar ist, insbesondere dann, wenn er nicht gleich entfernt wird, sondern noch aushärtet. Durch den erfindungsgemäßen Verbindungskanal 23 werden diese Nachteile vermieden. Ein Hochkriechen des Teiges an der Innenwand 45 bzw. ein Hochkriechen in dem von der rohrförmigen Hülse 29 und der Innenwand 45 gebildeten Ringspalt 46 ist durch den Verbindungskanal 23 ausgeschlossen.

Wie aus Fig. 1 zu erkennen ist, liegt bei diesem Ausführungsbeispiel der maximale Füllstand 28 nicht höher als das obere Ende der rohrförmigen Hülse 29, deren Abstand zum Boden 26 des Arbeitsbehälters 2 mit L bezeichnet ist. Aber auch dann, wenn der maximale Füllstand 28 oberhalb der Eintrittsöffnung 44 des Verbindungskanals 23 liegen würde - allerdings müßte dabei auch der obere Rand der rohrförmigen Hülse 29 in dieser Höhe liegen - arbeitet die Erfindung wirkungsvoll, da zwar flüssige Nahrungsmittel über den Verbindungskanal 23 in die Ausnehmung 22 eintreten können, derartig flüssige Nahrungsmittel lassen sich aber immer gut wieder aus der Ausnehmung 22 ausspülen. Bei zähflüssigen Teigen, ist ein Eintreten von Teig in den Verbindungskanal 23 nicht möglich, wenn der Querschnitt des Verbindungskanals 23 entsprechend klein bemessen ist. Sollte dennoch ein gewisser Anteil von Nahrungsmitteln in den Verbindungskanal 23 eindringen, so wird dieser bei Rotation des Arbeitswerkzeugs 4 wieder aus dem Verbindungskanal 23 nach außen infolge der auf die Nahrungsmittel einwirkenden Zentrifugalkräfte herausgeschleudert.

In der Regel wird nach Beenden eines Bearbeitungsvorganges, also dann, wenn die Nahrungsmittel sich wieder an der Außenfläche 27 des Arbeitswerkzeugs 4 anlegen wollen, das Arbeitswerkzeug 4 aus dem Behälter nach oben herausgezogen. Hierbei wirkt sich wiederum die Ausbildung des Verbindungskanals 23 als vorteilhaft aus, da über diesen Luft in die Ausnehmung 22 einströmen kann, so daß der das offene Ende 24 der Ausnehmung 22 verschließende sowie der sich in die Ausnehmung 22 abgesetzte Nahrungsmittelteil leicht aus dieser nach unten entgleiten kann, wenn Luft über den Verbindungskanal 23 in die Ausnehmung 22 von oben her nachströmt. Durch diese Maßnahme wird die zum Herausnehmen des Arbeitswerkzeugs 4 erforderliche Handkraft erheblich reduziert.

Zum Einfüllen von Nahrungsmitteln weist der Deckel 39 einen Einfüllschacht 47 auf, der sich seitlich neben der Mittellinie 48 des Arbeitsbehälters 2 nach oben erstreckt. Die Ausnehmung 22 sowie die rohrförmige Hülse 29 und der Arbeitsbehälter 2 verlaufen konzentrisch zur Mittellinie 48 der Antriebswelle 9.

## Patentansprüche

1. Arbeitswerkzeug (4) zum Rühren, Kneten oder Zerkleinern von Nahrungsmitteln für den Einsatz im Innenraum (25) eines Arbeitsbehälters (2) einer elektrisch angetriebenen Küchenmaschine (16), welches eine mit mindestens einem Einzelwerkzeug (1, 8, 3, 10, 17, 18) versehene Nabe (15) mit einer zentralen Ausnehmung (22) aufweist, die an ihrem dem Boden (26) des Arbeitsbehälters (2) zugewandten Ende (24) offen ist und in der eine Mitnehmerkupplung (20) ausgebildet ist, die ihrerseits von dem offenen Ende (24) her mit einer Gegenkupplung (21) einer Antriebswelle (9) der Küchenmaschine (16) kuppelbar und von dieser antreibbar ist,
**dadurch gekennzeichnet,**
daß die zentrale Ausnehmung (22) der Nabe (15) über einen Verbindungskanal (23) mit der Außenfläche (27) des Arbeitsbehälters (2) verbunden ist und daß der Verbindungskanal (23) oberhalb des offenen Endes (24) der Ausnehmung (22) in die Außenfläche (27) mündet.

2. Arbeitswerkzeug nach Anspruch 1,
**dadurch gekennzeichnet**,
daß der Verbindungskanal (27) oberhalb des für den Arbeitsbehälter (2) maximal zulässigen Füllstandes (28) in die Außenfläche (27) mündet.

3. Arbeitswerkzeug nach Anspruch 1,
**dadurch gekennzeichnet**,
daß das offene Ende (24) in geringem Abstand zum Boden (26) des Arbeitsbehälters (2) verläuft.

4. Arbeitswerkzeug nach Anspruch 1,
**dadurch gekennzeichnet**,
daß der Verbindungskanal (27) im wesentlichen horizontal verläuft.

5. Arbeitswerkzeug nach Anspruch 1,
**dadurch gekennzeichnet**,
daß der Verbindungskanal (27) in die Wand der Mitnahmekupplung (20) eindringt.

6. Arbeitswerkzeug nach Anspruch 1,
**dadurch gekennzeichnet**,
daß die Mitnahmekupplung (20) bei in den Arbeitsbehälter (2) eingesetztem Arbeitswerkzeug (4) oberhalb des maximalen Füllstandes des Arbeitsbehälters (2 ) in der Ausnehmung (22) der Nabe (15) endet.

7. Arbeitswerkzeug nach Anspruch 1,
**dadurch gekennzeichnet**,
daß der Querschnitt des Verbindungskanals (23) so eng bemessen ist, daß zähe Nahrungsmittel, wie Teig, diesen nicht passieren können.
